# EUROPÄISCHE PATENTANMELDUNG

(11) **EP 4 289 795 A1**
(43) Veröffentlichungstag der Anmeldung: **13.12.2023**
(21) Anmeldenummer: 23178347.3
(22) Anmeldetag: 09.06.2023
(51) Int. Cl.: C02F 1/44, C02F 1/72, B01D 61/04, C02F 103/08

(54) **VERFAHREN ZUR GEWINNUNG VON SÜSSWASSER AUS SALZLÖSUNGEN**

(30) Priorität: 09.06.2022 DE 102022114546
(71) Anmelder: Nitzsche, Stefan, 06237 Leuna (DE); Nitzsche, Reinhard, 06237 Leuna (DE)
(72) Erfinder: Nitzsche, Stefan, 06237 Leuna (DE); Nitzsche, Reinhard, 06237 Leuna (DE)
(74) Vertreter: Findeisen Neumann Scheit Partnerschaft mbB

(57) **Zusammenfassung**

Es wurde ein Verfahren zur Süßwassergewinnung durch Entsalzung höher konzentrierter Salzlösungen wie zum Beispiel Meerwasser mittels des Umkehrosmoseverfahrens erfunden, das es gestattet, das entsalzte Wasser durch eine katalytische Vorbehandlung des eingesetzten Salzwassers mit Metalloxidkatalysatoren mit einem erheblich verminderten Energieaufwand zu erzeugen. Besonders vorteilhaft ist die Anwendung zur Meerwasserentsalzung, da mit diesem Verfahren der erforderliche Druck von 6 - 8 MPa um 2 - 3 MPa und der Energieverbrauch von 2 - 4 kWh um 0,4 - 1,2 kWh je m³ entsalzten Wassers gegenüber den herkömmlichen Verfahren gesenkt wird. Das Verfahren ist einfach in vorhandenen Anlagen realisierbar und führt bei Neuanlagen zu Senkung der Investitionskosten.

## Beschreibung

Die Erfindung bezieht sich auf die Gewinnung von Süßwasser aus höher konzentrierten Salzlösungen wie zum Beispiel Meerwasser durch Umkehrosmose.

Es gibt verschiedene Verfahren, die zur Trinkwassergewinnung aus Meerwasser und gegebenenfalls anderen höher konzentrierten Salzlösungen angewandt werden.

Mit dem am meisten angewandten mehrstufigen Entspannungsverdampfungsverfahren wird mit einem hohen Energieaufwand von 23 - 27 kWh/m³ Trinkwasser aus Meerwasser gewonnen. Das Verfahren wird wegen des hohen Energieaufwandes normalerweise unter Nutzung der Abwärme von Wärmekraftwerken eingesetzt.

Ein weiteres angewandtes Verfahren ist die Membrandestillatiion auf der Basis der Temperaturabhängigkeit des Dampfdruckes des Wassers und seiner Lösungen, das mit hydrophoben semipermeablen Membranen arbeitet. Durch die notwendige Aufheizung des zu entsalzenden Wassers wird das Verfahren normalerweise ebenfalls unter Nutzung der Abwärme von Wärmekraftwerken angewendet.

Insgesamt energetisch günstiger ist das Umkehrosmoseverfahren, das für die Meerwasserentsalzung meist dort angewendet wird, wo keine günstige Abwärme zur Verfügung steht, da keine Aufheizung der Salzlösung erforderlich ist. Die Umkehrosmose arbeitet unter Ausnutzung des osmotischen Druckes. Stofflösungen haben einen osmotischen Druck, der unter isothermen Bedingungen nach der van't Hoffschen Gleichung linear von der Konzentration der gelösten Stoffe abhängt. Das führt dazu, dass beim Kontakt verschieden konzentrierter Lösungen eine Triebkraft zur Verdünnung der konzentrierteren Lösung durch Diffusion des Lösungsmittels in die konzentriertere Lösung vorhanden ist. Beim Umkehrosmoseverfahren wird dieser Effekt umgekehrt und ausgenutzt, indem durch Einwirkung eines Druckes praktisch nur die Wassermoleküle durch eine semipermeable Membran gedrückt werden und so entsalztes Wasser gewonnen wird. Der notwendige Druck liegt dabei beim Meerwasser bei 6 - 8 MPa. Der Energieverbrauch, der praktisch rein elektrische Arbeit für die Druckerhöhung ist, beträgt dabei in den technischen Anlagen 2 - 4 kWh/m³ und ist ein Hauptkostenfaktor dieses Verfahrens.

Es ist weiterhin bekannt, Brauchwasser mit Metalloxidkatalysatoren nach dem MOL^{®}LIK Verfahren zu behandeln und damit seine Eigenschaften zur Verhinderung von Scaling- und Foulingprozessen in Industrieanlagen zu verändern. Es ist auch bekannt, dass dieser Effekt zur Laufzeiterhöhung und Effektivitätssteigerung bei Umkehrosmoseanlagen zur Trinkwasserreinigung und für weitere Anwendungen bis hin zu Küchengeräten genutzt wird (Jan Koppe, Merseburger Beiträge zur Geschichte der chemischen Industrie Mitteldeutschlands, 41,(1/2020),S. 96 -97).

Es wurde nun gefunden, dass es durch katalytische Vorbehandlung von Meerwasser oder anderen Salzlösungen insbesondere mit Gesamtsalzgehalten von mehr als 0,4 Mol/l mit einem Oxidkatalysator auf Basis von Metalllegierungen für die Entsalzung durch Umkehrosmose gelingt, den erforderlichen Druck von 6 - 8 MPa um 2 - 3 MPa und den Energieverbrauch von 2 - 4 kWh je m³ um 0,4 - 1,2 kWh je m³ entsalzten Wassers gegenüber dem herkömmlichen Verfahren zu senken. Zur katalytischen Behandlung wird das Meerwasser bzw. die andere Salzlösung vor der Umkehrosmose durch an sich bekannte Oxidkatalysatoren auf Basis von Metalllegierungen geleitet. Derartige Oxidkatalysatoren sind als wandartige Elemente ausgebildet, deren Oberfläche von einem Metalloxid gebildet ist. Beim Durchleiten des Meerwassers bzw. der anderen Salzlösung durch diese Oxidkatalysatoren wird das Meerwasser bzw. die andere Salzlösung an den Metalloxid-Oberflächen entlanggeführt und damit katalytisch behandelt.

Durch den Einbau des Katalysators in die Wasserzuführungsleitung kann das Verfahren in vorhandenen Anlagen sehr einfach realisiert werden. Durch den niedrigeren Druck gegenüber den bekannten Verfahren können bei Neuanlagen Investitionskosten eingespart werden.

Das vorgeschlagene Verfahren arbeitet weder mit chemischen oder anderen Zusatzstoffen und ist daher sehr umweltfreundlich.

In einer vorteilhaften Ausführung ist der Oxidkatalysator auf Basis oxidierter Chromnickelstähle ausgeführt.

Eine Ausgestaltung sieht vor, dass der Salzgehalt des zu entsalzenden Wassers insgesamt über 0,4 Mol/l liegt.

Es wird vorgeschlagen, das Verfahren zur Meerwasserentsalzung anzuwenden.

## Patentansprüche

1. Verfahren zur energetisch günstigen Erzeugung von Süßwasser durch Entsalzung höher konzentrierter Salzlösungen durch Umkehrosmosebehandlung, **dadurch gekennzeichnet, dass** das zu entsalzende Wasser vor der Umkehrosmosebehandlung katalytisch mit einem Oxidkatalysator auf Basis von Metalllegierungen behandelt wird.

2. Verfahren nach Anspruch 1, **dadurch gekennzeichnet, dass** der Oxidkatalysator auf Basis oxidierter Chromnickelstähle ausgeführt ist.

3. Verfahren nach einem der Ansprüche 1 oder 2, **dadurch gekennzeichnet, dass** der Salzgehalt des zu entsalzenden Wassers insgesamt über 0,4 Mol/l liegt.

4. Verfahren nach Anspruch 3 **dadurch gekennzeichnet, dass** das Verfahren zur Meerwasserentsalzung angewendet wird.
